# EUROPEAN PATENT SPECIFICATION

(11) **EP 3 060 505 B1**
(45) Date of publication and mention of the grant of the patent: **11.12.2019**
(21) Application number: 14855562.6
(22) Date of filing: 22.10.2014
(51) Int. Cl.: B42D 3/18, B62B 3/02, B07C 7/00

(54) **METHOD AND APPARATUS FOR HANDLING BOOKS AND OTHER LIBRARY MATERIAL IN A LIBRARY**
VERFAHREN UND VORRICHTUNG ZUR HANDHABUNG VON BÜCHERN UND ANDEREM BIBLIOTHEKSMATERIAL IN EINER BIBLIOTHEK
PROCÉDÉ ET APPAREIL POUR GÉRER DES LIVRES ET D'AUTRES DOCUMENTS DE BIBLIOTHÈQUE DANS UNE BIBLIOTHÈQUE

(30) Priority: 23.10.2013 FI 20136046
(43) Date of publication of application: 31.08.2016
(73) Proprietor: P.V. Supa Oy, 00390 Helsinki (FI)
(72) Inventor: KYTÖMÄKI, Teemu, FI-00530 Helsinki (FI); MONONEN, Jouni, FI-00220 Helsinki (FI); KYRÖ, Ville, FI-00440 Helsinki (FI); MÖNKKÖNEN, Arvi, FI-04300 Tuusula (FI)
(74) Representative: Salomäki, Juha Kari Ensio
(86) International application number: PCT/FI2014/050799
(87) International publication number: WO 2015/059359

(56) References cited:
- WO-A2-2004/065266
- WO-A2-2004/065266
- CA-A1- 2 480 485
- US-A- 5 647 720
- US-A- 5 647 720
- US-A1- 2005 191 159
- US-A1- 2010 104 410
- US-B1- 6 457 727

## Description

The object of the invention is a method as presented in the preamble of claim 1 and an apparatus as presented in the preamble of claim 7 for handling books and other library material in a library or corresponding location.

Books and other material, such as journals, sound recordings, videos, *et cetera,* returned to libraries are nowadays usually sorted by means of automatic sorting devices, after which they are transferred to their correct locations. The books and other material are loaded by means of loading devices e.g. onto collection carts or into collection boxes, by means of which they are transported to the correct shelves, after which they are unloaded from the carts or boxes onto the shelves.

A problem with collection boxes is that the library material does not necessarily settle into boxes the right way round, in such a way that unloading the material onto shelves would be as easy and quick as possible. Also, handling the boxes is awkward in the cramped spaces between shelves, and moving and unloading boxes is also unergonomic for personnel.

One solution according to prior art for handling library material is presented in United States patent publication no. US 6,074,156. This solution comprises automatically-operating loading stations in connection with a sorting apparatus, as well as carts that are arranged to be fitted into loading stations and to be loaded with books or other library material. One problem with this solution is that the loading apparatus comprises a lot of parts and is structurally complex, owing to which it is also expensive in terms of costs. In addition, the operation of the loading apparatus is rather slow and the operational reliability is not very good, either. The loading apparatus also takes up a lot of space around the return apparatus and sorting apparatus. A further drawback in this solution is that the technology being used for loading carts is disposed in its entirety in loading stations rigidly fixed to the floor, which means that if some defect occurs in some loading station, this station cannot be used before the defect is repaired. A serviceman must generally be called to the location to repair a defect, which incurs costs and also the loading station is inoperable until the serviceman has time to repair the defect. A further drawback is that the cart to be used in the solution is unergonomic when books and other material are unloaded from a more central, and in particular from the lowermost, shelf. Material can also easily drop off the cart when loading and moving the cart.

Known in the art also are other types of solutions for handling library material in a library, in which solutions library material is loaded automatically from a sorting apparatus onto collection carts. In these solutions, however, there are the same type of problems as in the solution presented in the aforementioned United States patent publication. Many solutions known in the art are unergonomic for personnel and they have poor operational reliability. For example, the loading of different-sized books and other articles onto a cart can cause problems. If the loading apparatus is dimensioned according to the largest possible book, smaller books can possibly drop past the cart onto the floor. In addition, in some solutions a collection cart cannot be detached from a charging station before the cart is fully charged, owing to which the solution is not very flexible or practical. Prior art solutions are generally also complex and expensive.

International patent publication WO2004/065266 and US-patent publication US 5,647,720 also present arrangements for handling books. The solutions of these publications have substantially the same disadvantages that are mentioned above. For example, the trolley of WO2004/065266 has no actuator for moving the stop (47) but the stop (47) is moved by the lifting fork (38) which is situated in the trolley receiving unit (31). Whereas, in US 5,647,720 the bookshelf is not turnable in relation to the frame of the handcart.

The object of the present invention is to eliminate the aforementioned drawbacks and to achieve a practical, operationally reliable, space-efficient and inexpensive method and apparatus for handling books and other library material in a library or corresponding location. The method according to the invention is characterized by what is presented in the characterization part of claim 1. Likewise the appliance according to the invention is characterized by what is presented in the characterization part of claim 7. Other embodiments of the invention are characterized by what is disclosed in the other claims.

One advantage of the solution according to the invention is that the apparatus belonging to it is simple in structure and therefore inexpensive to implement. Another advantage is that the technology being used in loading library material is disposed mainly in a collection cart, onto which sorted library material is loaded, owing to which a defect occurring in an individual cart does not affect the operation of the rest of the apparatus because the defective cart can easily be replaced with another cart. From this follows also the advantage that the rest of the sorting apparatus can be made to be simpler. Another advantage is that the collection cart does not necessarily need to be fully loaded before it can be moved elsewhere. One advantage is also that the solution is ergonomic when loading and moving library material as well as when unloading it onto shelves. Another advantage is that library material settles onto the cart into a suitable attitude when loading in such a way that unloading the material from the cart is easy and quick. Another advantage is that library material does not easily drop off the cart when loading or moving the cart. A further advantage of the solution is that loading books of different sizes and other material onto the collection cart does not cause problems.

In the following the invention will be described in more detail by the aid of one example of its embodiment with reference to the attached drawings, wherein
- Fig. 1: presents a simplified and diagrammatic top view of an apparatus in a library, which apparatus is used for returning and sorting library material,
- Fig. 2: presents a part of the apparatus belonging to the solution according to the invention as viewed obliquely from the front and top, which apparatus is used for sorting library material and for loading the collection cart, as well as collection carts onto which books and other library material is loaded,
- Fig. 3: presents a collection cart belonging to the solution according to the invention, as viewed from the side and top,
- Fig. 4: presents an oblique front view of a collection cart belonging to the solution according to the invention in a loading position, when the back stop that belongs to the cart and supports books is in the upper position,
- Fig. 5: presents an oblique front view of a collection cart belonging to the solution according to the invention in a loading position, when the back stop that belongs to the cart and supports books is in the lower position,
- Fig. 6: presents an oblique front view of a partially sectioned collection cart belonging to the solution according to the invention in a loading position,
- Fig. 7: presents an oblique front view of a collection cart belonging to the solution according to the invention when the pallet belonging to the cart has been turned upwards from its loading position, and
- Fig. 8: presents one sorting module belonging to the solution according to the invention, as viewed obliquely from the front and top, and the docking station of a collection cart situated in connection with it.

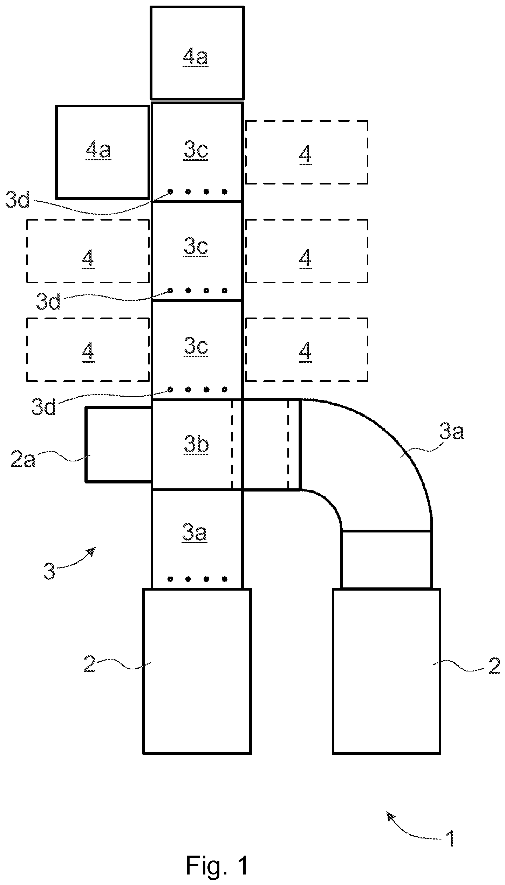

Fig. 1 presents one typical return automat of a library, said automat enabling application of the invention, and a sorting automat connected to it. The return automat 1 presented in the figure comprises two feed-in units 2, into which customers can return books and other library material, as well as one feed-in unit 2a into which library personnel can feed library material intended for sorting, such as e.g. material that customers have returned in another way than using the return automat 1. Hereinafter the collective designation "article" is use to refer to books and other library material, such as periodicals, sound recordings, videos, et *cetera.*

From the feed-in units 2 and 2a returned articles are arranged to be transferred to the sorting automat 3. The conveyors 3a are arranged to convey articles intended for sorting to a turntable 3b, which is arranged to turn the articles into the correct attitude for sorting. Also articles from the feed-in unit 2a of the personnel is arranged to be transferred to the turntable 3b. The sorting automat 3 comprises a conveyor 3d, which is arranged to convey articles onwards from the turntable 3b to the sorting modules 3c, which are arranged to sort the articles into the correct categories. From the sorting modules 3c the sorted articles are arranged to be loaded according to category onto collection carts 4 or into collection boxes 4a. The solution according to the invention comprises a certain type of collection cart 4, which is arranged to dock into connection with some sorting module 3c for loading the cart 4.

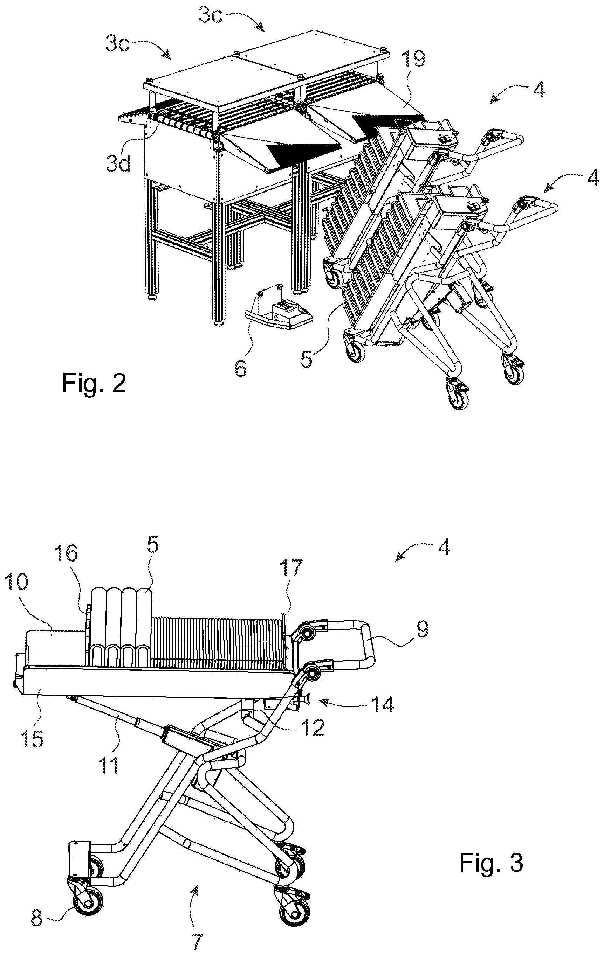

Fig. 2 presents two sorting modules 3c and a collection cart 4 belonging to the solution according to the invention. The sorting modules 3c are fitted consecutively and a conveyor 3d connects them, which conveyor is arranged to transport articles to the sorting modules 3c. In the sorting apparatus are means for identifying articles and for sorting them. On the basis of the sorting data, the sorting apparatus is arranged to transfer each article to the correct sorting module 3c, which is further arranged to transfer the article onto a collection cart 4.

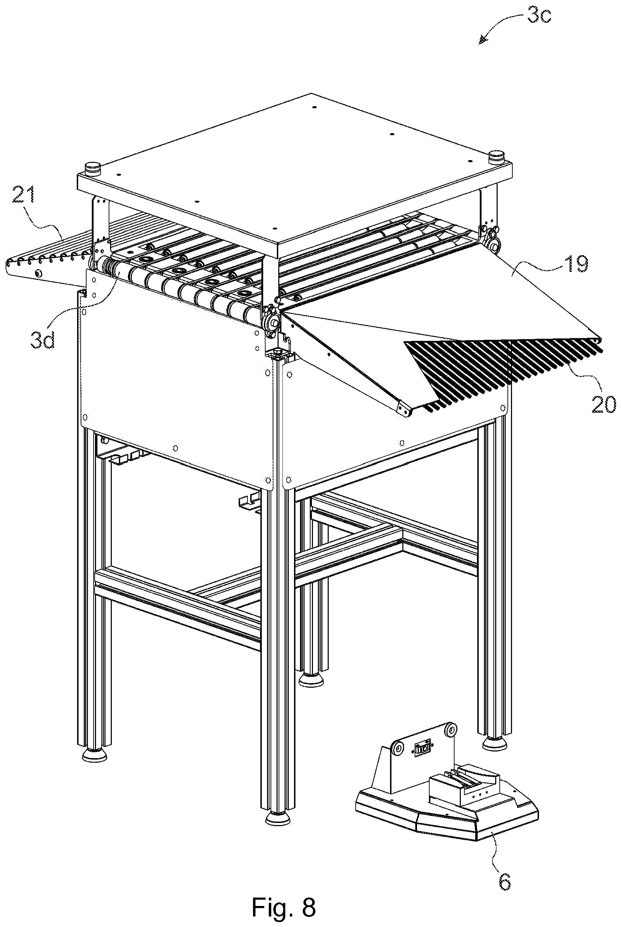

A docking station 6 is fitted on the floor in connection with each sorting module 3c, into which docking station a collection cart 4 is arranged to dock. In the situation of Fig. 2 articles 5, in this case books, have been loaded onto the collection carts 4. One collection cart 4 has docked into a docking station 6 and the other collection cart 4 is already detached from a docking station 6. A sorting module 3c comprises means, by the aid of which each article is arranged to be transferred to the side to a guide ramp 19 connected to the sorting module 3c, guided by which ramp the article is arranged to slide owing to gravity onto the collection cart 4. The sorting module 3c and the structure of it are presented in more detail in Fig. 8.

Fig. 3 presents a collection cart 4 belonging to the solution according to the invention, as viewed from the side and top, said cart being in its unloading attitude. A collection cart 4 comprises a frame 7, wheels 8, a pushing rod 9, a pallet 10 and a turning means 11, which is arranged to turn the pallet 10 in the vertical plane. The turning means is an electrically-operated spindle motor in this embodiment of the invention. The pallet 10 is hinged from its first end, i.e. pull rod 9 side, to the frame 7 with hinges 12 and the turning means 11 is arranged to lift and lower the second end of the pallet 10 around these hinges 12. In the situation of Fig. 3 the collection cart 4 is therefore in an unloading state, and the pallet 10 is on an essentially horizontal plane, in which case the material loaded onto the pallet 10 is easy to unload from the pallet e.g. onto shelves. A cart 4 also comprises at least one battery functioning as a power source, from where the turning means 11 receives its operating current, and a control unit 14 provided with the necessary pushbuttons or corresponding means, by the aid of which control unit the pallet 10 is arranged to be turned in the vertical plane into different attitudes via the turning means 11. The pallet 10 comprises a side support 15 as well as a moving back stop 16 and end support 17, which are arranged to support articles 5 loaded onto the pallet 10, in this case e.g. books and cases of CD disks, as well as to prevent them falling from the pallet. In the situation of Fig. 3 the pallet 10 is not completely full. The pallet 10 is fitted into a slightly inclined attitude in such a way that the first side edge on the side of the side support 15 of the pallet 10 is slightly lower than the second open side edge of the pallet 10, as a result of which the articles 5 are resting on the side support 15 due to gravity.

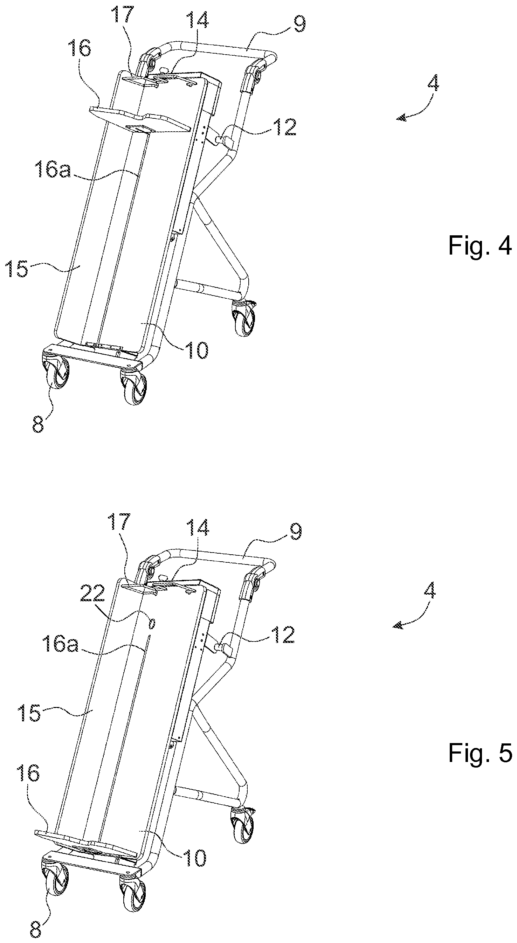

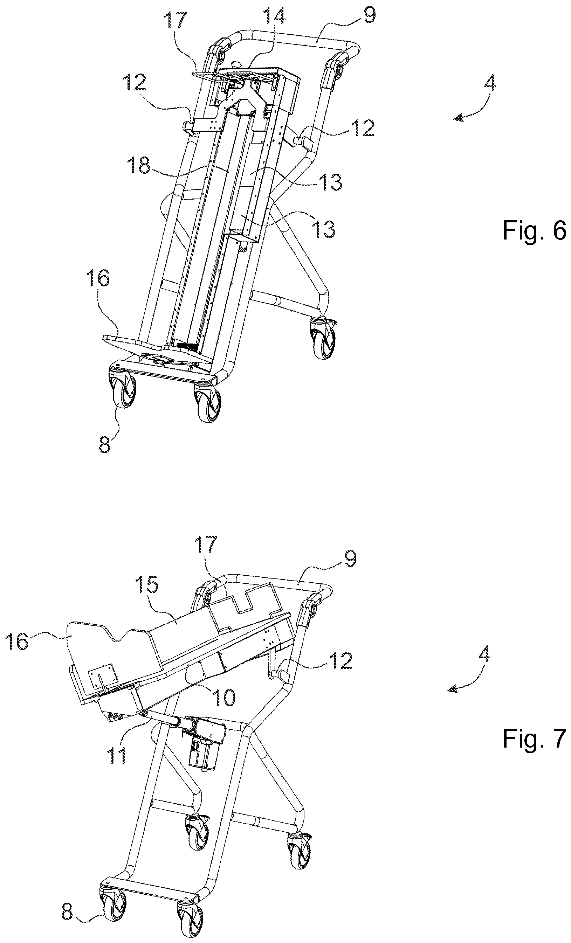

Figs. 4, 5 and 6 present an oblique front view of a collection cart 4 belonging to the solution according to the invention, in a loading position. The pallet 10 belonging to the collection cart 4 has been cut away from Fig. 6, in which case the two power sources 13, such as batteries, belonging to the cart 4 and fitted under the pallet 10, are visible. In the loading position the second end of the pallet 10 belonging to the cart 4 is lowered into its lower position by the aid of the turning means 11, in which case the pallet 10 is in an almost vertical attitude, however inclined slightly with respect to the vertical direction. When a collection cart 4 is brought to a sorting module 3c for loading, the cart 4 is connected to a docking station 6 fitted in connection with the sorting module 3c. Before the loading of the cart 4, the movable back stop 16 is fitted to the height of the bottom edge of the guide ramp 19 belonging to the sorting module 3c, or to slightly below it. The back stop 16 is adapted to be movable in the longitudinal direction of the pallet 10 guided by a guide rail 16a on the pallet 10 and the control unit 14 has pushbuttons or corresponding means for moving the back stop 16. In Figs. 5 and 6 the back stop 16 is at its second extreme end at the second end of the pallet 10 and in Fig. 4 at its first extreme end near the first end of the pallet 10.

After that, when the back stop 16 is fitted to s suitable height before starting the loading of the collection cart 4, the sorting module 3c is arranged to transfer articles, such as e.g. books, along the guide ramp 19 of the cart 4. The first article is arranged to rest on the back stop 16, after which the back stop 16 is arranged to move downwards towards the second end of the pallet 10. The back stop 16 is arranged to move downwards automatically by the aid of the power means 18, which power means 18 is, like the turning means 11, an electrically-operated spindle motor, and it also receives its operating current from the batteries 13.

After this the next article coming from the sorting module 3c is arranged to rest on the first article and the back stop 16 is arranged to move downwards again. The back stop 16 is arranged to move downwards always to the extent that the top edge of the previous article is at the height of the bottom edge of the guide ramp 19 of the sorting module 3c or suitably slightly below it. The apparatus comprises detection means 22 that are fitted to the collection cart 4 and are connected to the control system of the collection cart 4, which detection means are arranged to detect an article 5 coming onto the pallet 10, after which the back stop 16 is arranged to move downwards until the detection means 22 no longer detect an article. In this way the back stop 16 is arranged to move to the correct height according to the size of each article 5 coming onto the pallet 10 at any given time. The detection means 22 comprise e.g. a photoelectric cell, which is arranged to detect when there is an article in front of it and when there is not. Alternatively the detection means 22 for lowering the back stop 16 can be disposed in connection with the sorting module 3c, instead of with the collection cart 4, in which case the control of the back stop 16 is implemented via a docking station 6.

The control system of a collection cart 4 is arranged to transmit to a sorting module 3c, e.g. via a docking station 6, information about when the pallet 10 of the cart 4 is full, and no more articles 5 will fit onto it, in which case the sorting module 3c is arranged to stop the transfer of articles 5 to the cart 4. Alternatively there can be detection means on the sorting module for detecting the filling of the pallet 10. The sorting module 3c is also arranged to detect whether a collection cart 4 is fitted to the side of it. If there is no cart on the side, the sorting module 3c does not try to transfer articles 5 to this side.

The loading is continued in the same way until the cart 4 is fully loaded or until all the articles intended for loading have been loaded onto the cart 4. If the pallet 10 is not full, the back stop 16 can be raised upwards by the aid of the power means 18 with the pushbuttons in the control unit 14, in which case the last, i.e. the topmost, article rests on the end support 17 at the first end of the pallet 10. When the cart 4 has been loaded, the cart 4 is detached from the docking station 6 and the cart 4 is transported supported on the wheels 8 by guiding from the pushing rod 9 to the unloading location. Before unloading articles the pallet 10 is arranged to be turned into the horizontal attitude presented in Fig. 3, which facilitates unloading.

Fig. 7 again presents an oblique front view of an empty collection cart 4 belonging to the solution according to the invention. In the situation of Fig. 7 the second end of the pallet 10 has been lifted by the aid of the turning means 11 upwards around the hinges 12. It can be clearly seen from Fig. 7 how the second open side edge of the pallet 10 is higher than the first side edge of the pallet 10, said first side edge being provided with a side support 15.

Fig. 8 presents in more detail one sorting module 3c belonging to the solution according to the invention. The sorting module 3c comprises a conveyor 3d, which is arranged to move articles onwards on the sorting automat 3. In addition, the sorting module 3c comprises conveying means 3e, which are arranged to move articles to the side of the module 3c onto a collection cart 4 or into a collection box. The sorting automat 3 is arranged to sort articles according to categories in such a way that the articles to be transferred to the same location are loaded onto/into the same collection carts 4 or collection boxes. A guide ramp 19 is connected to the sorting module 3c, along which ramp articles are arranged to slide onto the pallet 10 of a collection cart 4. A docking station 6 is fitted on the floor below the guide ramp 19, into which docking station a collection cart 4 is arranged to dock during loading. When a collection cart 4 is connected to a docking station 6, the batteries 13 of the collection cart are arranged to be charged at the same time by the aid of charging means belonging to the docking station 6.

The guide ramp 19 is shaped to be inclined in such a way that articles slide along the ramp in a suitable attitude onto the inclined pallet 10 of a collection cart 4. Also connected to the guide ramp 19 are bristles 20, which are arranged to facilitate the correct fitting of different-sized articles onto the pallet 10 of a collection cart 4. The stiffness of the bristles 20 is selected in such a way that larger articles partly drop through the bristles 20 onto the pallet 10, whereas smaller and lighter articles slide onto the pallet 10 over the bristles 20.

The sorting module 3c presented by Fig. 8 has guide rollers 21 on the opposite side to the guide ramp 19, along which guide rollers articles can be guided into collection boxes or corresponding. On the second side of a module 3c, instead of guide rollers 21, could just as well be the same type of guide ramp 19 as on the first side of the module 3c and on the floor a second docking station 6, in which case articles could be loaded from both sides of a module 3c onto a collection cart 4 belonging to a solution according to the invention.

With the method according to the invention books and other library material are handled in a library e.g. as follows: Articles 5 being returned are fed into the return automat 1 via feed-in units 2 or 2a. After this the return automat 1 conveys the articles 5 to the turntable 3b, which turns the articles 5 into the correct attitude for sorting, which means that an article 5 is in such an attitude after the turning that when transferred by the sorting module 3c later it settles the correct way round on a collection cart 4. In this case e.g. a book settles onto the pallet 10 of a cart 4 in such a way that the spine of the book remains visible. From the turntable 3b the articles 5 are conveyed onwards to sorting modules 3c. Next, the sorting modules 3c sort the articles 5 by conveying articles 5 belonging to the same category onto/into the same collection cart 4 or collection box 4a. The collection carts 4 are connected to the docking stations 6 situated in connection with the sorting modules 3c. The articles 5 are stacked on the pallet 10 of a cart 4 in such a way that an article 5 coming from a sorting module 3c slides along the guide ramp 19 connected to the sorting module 3c onto the pallet 10 resting on the back stop 16 of the pallet 10 or on the previous article loaded onto the pallet 10. An article 5 that has come onto the pallet 10 is detected by the aid of the detection means 22 belonging to the collection cart 4, in which case the back stop 16 moves automatically, controlled by the control system of the cart, downwards by the aid of the power means 18 towards the second end of the pallet 10, until the detection means 22 no longer detect the article 5. When the cart 4 has been loaded, it is transported to the correct section supported on the wheels 8 that are on the cart 4 by guiding from the pushing rod 9. Before unloading articles 5 from the cart, the second end of the pallet 10 is turned upwards by the aid of the turning means 11 in such a way that the pallet 10 turns into an essentially horizontal plane. The turning means 11 is controlled with pushbuttons or corresponding means belonging to the control unit 14 of the collection cart 4. After this the articles 5 are transferred by hand from the pallet 10 to the correct locations on a shelf or to some other location intended for them.

It is obvious to the person skilled in the art that the invention is not limited solely to the embodiment example presented above, but that it may vary within the scope of the claims to be presented below. Thus, for example, the return automat and sorting automat can also be different than what is described above. In this case e.g. the layout of the return automat and sorting automat and the number as well as the structure of the feed-in units, conveyors, turntables and sorting modules can also be different than what is described above.

It is further obvious to the person skilled in the art that the structure and operation of a collection cart can also be different than what is described above. In this case e.g. instead of the spindle motors presented there can be other types of actuators.

It is further obvious to the person skilled in the art that the detection means on the collection cart can of some other type than a photoelectric cell. The detection means can be e.g. some mechanically operating means.

It is further obvious to the person skilled in the art that the detection means can be disposed in connection with the sorting module, instead of with the collection cart, or both the collection cart and the sorting module can each have their own detection means.

It is further obvious to the person skilled in the art that a separate docking station is not necessarily needed, but instead a collection cart can be fitted to a sorting module for loading also without a docking station. In this case the wheels of the collection cart are e.g. locked, in which case the collection cart stays in its position during loading. In this case, when the power source is batteries, the charging of them can be managed by means of either a separate dock or separate charging device.

It is also obvious to the person skilled in the art that a collection cart can have some other quantity of batteries than two, such as e.g. only one battery or three or more batteries. In addition, the power source can be other than a battery, e.g. a small fuel cell.

## Claims

1. Method for handling books and other library material in a library or corresponding location, in which method books and other library material, i.e. articles (5), are sorted by means of at least one sorting module (3c) and loaded onto at least one collection cart (4), which comprises at least a frame (7), wheels (8) and a pallet (10) provided with a moving back stop (16), onto which pallet articles (5) are loaded, which pallet (10) is hinged near its first end to the frame (7) of the collection cart (4) with hinges (12), and a turning means (11) is arranged to turn the second end of the pallet (10) on the vertical plane upwards and downwards around the hinges (12), and before starting sorting the second end of the pallet (10) of the collection cart (4) is lowered by the aid of the turning means (11) on the collection cart (4) around hinges (12) to be essentially lower than the first end of the pallet (10), **characterized in that** before starting the loading of the collection cart (4) the back stop (16) is moved by the aid of a power means (18) belonging to the collection cart (4) to the starting height for loading, and as articles (5) are loaded onto the pallet (10), the back stop (16) is moved by the aid of the aforementioned power means (18) towards the lower second end of the pallet (10), and after all the articles intended for loading have been loaded onto the cart (4) the back stop (16) is raised upwards by the aid of the power means (18) until the last article (5) loaded rests on an end support (17) at the first end of the pallet (10).

2. Method according to claim 1, **characterized in that** an article (5) coming onto the pallet (10) is detected by the aid of detection means (22), in which case the back stop (16) is moved downwards until the detection means (22) no longer detect the article (5).

3. Method according to claim 1 or 2, **characterized in that** the power means (18) functions with electric current and receives its operating current from at least one power source (13) belonging to the collection cart (4), which power source is charged with charging means belonging to a docking station (6) that is in connection with a sorting module (3c), when the collection cart (4) is connected to the docking station (6), or at a separate charging point.

4. Method according to claim 1, 2 or 3, **characterized in that** with respect to the longitudinal direction of the pallet (10) the first side edge of the pallet (10), said side edge being provided with a side support (15), is kept lower than the open second side edge of the pallet (10), in which case the pallet (10) is in a suitably sloping attitude with respect to the longitudinal direction and the articles (5) that are on the pallet (10) rest on the side support (15) that is on the first side edge of the pallet (10).

5. Method according to any of the preceding claims, **characterized in that** articles (5) are conducted from the sorting module (3c) onto the collection cart (4) guided by a guide ramp (19) provided with bristles (20).

6. Method according to any of the preceding claims, **characterized in that** before the articles (5) start to be unloaded from the pallet (10), the pallet (10) is turned to an essentially horizontal plane by the aid of the turning means (11) on the collection cart (4).

7. Apparatus for handling books and other library material in a library or corresponding location, which apparatus comprises at least one sorting module (3c) and at least one collection cart (4), which is composed of at least a frame (7), wheels (8) and a pallet (10) having a first end with an end support (17) and a second end, and which pallet (10) is provided with a moving back stop (16) supporting library material, i.e. articles (5), onto which pallet (10) articles (5) are arranged to be loaded, and which collection cart (4) comprises a turning means (11), which is arranged to turn the second end of the pallet (10) on the vertical plane upwards and downwards around hinges (12) near the first end of the pallet (10), **characterized in that** the collection cart (4) comprises a power means (18), which is arranged to move the back stop (16) in the longitudinal direction of the pallet (10); towards the second end of the pallet (10) during loading of articles (5) and towards the first end of the pallet (10) after loading of the articles (5) to make the last loaded article (5) rest on the end support (17) at the first end of the pallet (10).

8. Apparatus according to claim 7, **characterized in that** the power means (18) is arranged to automatically move the back stop (16) downwards towards the second end of the pallet (10) when articles (5) are loaded onto the pallet (10).

9. Apparatus according to claim 7 or 8, **characterized in that**, for moving the back stop (16), on the collection cart (4) or on the sorting module (3c) are detection means (22) for detecting an article (5) coming onto the pallet.

10. Apparatus according to claim 7, 8 or 9, **characterized in that** with respect to the longitudinal direction of the pallet (10) the first side edge is provided with a side support (15) and the second side edge is open, and the first side edge provided with a side support (15) is lower than the open second side edge, in which case the pallet (10) is in a suitably sloping attitude with respect to the longitudinal direction and the articles (5) that are on the pallet (10) rest on the side support (15) that is on the first side edge of the pallet (10).

11. Apparatus according to any of the preceding claims 7-10, **characterized in that** the power means (18) and the turning means (11) are electrically-operated spindle motors and the collection cart (4) comprises at least one power source (13), from which the power means (18) and the turning means (11) receive their operating current.

12. Apparatus according to any of the preceding claims 7-11, **characterized in that** fitted in connection with the sorting module (3c) is a docking station (6), to which a collection cart (4) is arranged to be connected and in the docking station (6) are charging means, which are arranged to charge the power source (13) of the collection cart (4) when the collection cart (4) is connected to the docking station (6).

13. Apparatus according to any of the preceding claims 7-12, **characterized in that** on the collection cart (4) is a control unit (14), which comprises means for controlling the turning means (11) and the power means (18).

## Patentansprüche

1. Verfahren zur Handhabung von Büchern und anderem Bibliotheksmaterial in einer Bibliothek oder einem entsprechenden Ort, wobei in dem Verfahren Bücher und anderes Bibliotheksmaterial, d.h. Artikel (5) sortiert werden durch zumindest ein Sortiermodul (3c) und auf zumindest einen Sammelwagen (4) geladen werden, der zumindest einen Rahmen (7), Räder (8) und eine mit einer beweglichen Rücklaufsperre (16) versehene Palette (10) umfasst, wobei auf die Palette Artikel (5) geladen werden, wobei die Palette (10) nahe ihrem ersten Ende mit Scharnieren (12) am Rahmen (7) des Sammelwagens (4) angelenkt ist, und ein Drehmittel (11) eingerichtet ist, um das zweite Ende der Palette (10) in der vertikalen Ebene um die Scharniere (12) nach oben und unten zu drehen, und vor dem Starten des Sortierens das zweite Ende der Palette (10) des Sammelwagens (4) mit Hilfe des Drehmittels (11) auf dem Sammelwagen (4) um Scharniere (12) gesenkt wird, um wesentlich niedriger als das erste Ende der Palette (10) zu sein, **dadurch gekennzeichnet, dass** vor dem Starten des Beladens des Sammelwagens (4) die Rücklaufsperre (16) mit Hilfe eines zum Sammelwagen (4) gehörenden Kraftmittels (18) auf die Starthöhe für die Beladung bewegt wird, und, während Artikel (5) auf die Palette (10) geladen werden, die Rücklaufsperre (16) mit Hilfe des zuvor genannten Kraftmittels (18) in Richtung des unteren zweiten Endes der Palette (10) bewegt wird, und, nachdem alle zum Beladen bestimmten Artikel auf den Wagen (4) geladen worden sind, die Rücklaufsperre (16) mit Hilfe des Kraftmittels (18) nach oben angehoben wird, bis der letzte beladene Artikel (5) auf einer Endstütze (17) an dem ersten Ende der Palette (10) aufliegt.

2. Verfahren nach Anspruch 1, **dadurch gekennzeichnet, dass** ein auf die Palette (10) kommender Artikel (5) mit Hilfe eines Erfassungsmittels (22) erfasst wird, wobei in diesem Fall die Rücklaufsperre (16) nach unten bewegt wird, bis das Erfassungsmittel (22) den Artikel (5) nicht mehr erfasst.

3. Verfahren nach Anspruch 1 oder 2, **dadurch gekennzeichnet, dass** das Kraftmittel (18) mit elektrischem Strom funktioniert und seinen Betriebsstrom von zumindest einer zur Sammelwagen (4) gehörenden Stromquelle (13) erhält, wobei die Stromquelle mit einem Lademittel aufgeladen wird, das zu einer Dockingstation (6) gehört, die mit einem Sortiermodul (3c) in Verbindung (4) steht, wenn der Sammelwagen (4) mit der Dockingstation (6) verbunden ist, oder an einer separaten Ladestation.

4. Verfahren nach Anspruch 1, 2 oder 3, **dadurch gekennzeichnet, dass** in Bezug auf die Längsrichtung der Palette (10) die erste Seitenkante der Palette (10), wobei die besagte Seitenkante mit einer Seitenstütze (15) versehen ist, niedriger gehalten wird als die offene zweite Seitenkante der Palette (10), wobei sich in diesem Fall die Palette (10) in einer geeignet schrägen Haltung bezüglich der Längsrichtung befindet und die auf der Palette (10) befindlichen Artikel (5) auf der Seitenstütze (15) aufliegen, die sich auf der ersten Seitenkante der Palette (10) befindet.

5. Verfahren nach irgendeinem der vorstehenden Ansprüche, **dadurch gekennzeichnet, dass** Artikel (5) von dem Sortiermodul (3c) auf den Sammelwagen (4) geleitet werden, der von einer Führungsrampe (19) geführt ist, die mit Borsten (20) versehen ist.

6. Verfahren nach irgendeinem der vorstehenden Ansprüche, **gekennzeichnet dadurch dass**, bevor die Artikel (5) starten, von der Palette (10) entladen zu werden, die Palette (10) in eine im Wesentlichen horizontale Ebene mit Hilfe des Drehmittels (11) auf dem Sammelwagen (4) gedreht wird.

7. Vorrichtung zum Handhaben von Büchern und anderem Bibliotheksmaterial in einer Bibliothek oder einem entsprechenden Ort, wobei die Vorrichtung zumindest ein Sortiermodul (3c) und zumindest einen Sammelwagen (4) umfasst, der aus zumindest einem Rahmen (7), Rädern (8) und eine Palette (10) mit einem ersten Ende mit einer Endstütze (17) und einem zweiten Ende besteht, und wobei die Palette (10) mit einer beweglichen Rücklaufsperre (16) versehen ist, die Bibliotheksmaterial stützt, d.h. Artikel (5), wobei auf die Palette (10) Artikel (5) zum Beladen angeordnet sind, und wobei der Sammelwagen (4) ein Drehmittel (11) umfasst, das eingerichtet ist, um das zweite Ende der Palette (10) in der vertikalen Ebene um Scharniere (12) nahe dem ersten Ende der Palette (10) nach oben und unten zu drehen, **dadurch gekennzeichnet, dass** der Sammelwagen (4) ein Kraftmittel (18) umfasst, das eingerichtet ist, um die Rücklaufsperre (16) in Längsrichtung der Palette (10) zu bewegen in Richtung des zweiten Endes der Palette (10) während des Beladens von Artikeln (5) und in Richtung des ersten Endes des Palette (10), nach dem Beladen der Artikel (5), um den zuletzt beladenen Artikel (5) auf der Endstütze (17) am ersten Ende der Palette (10) aufliegen zu lassen.

8. Vorrichtung nach Anspruch 7, **dadurch gekennzeichnet, dass** das Kraftmittel (18) eingerichtet ist, um die Rücklaufsperre (16) automatisch nach unten in Richtung des zweiten Endes der Palette (10) zu bewegen, wenn Artikel (5) auf die Palette (10) geladen werden.

9. Vorrichtung nach Anspruch 7 oder 8, **dadurch gekennzeichnet, dass** zum Bewegen des Rücklaufsperre (16) auf dem Sammelwagen (4) oder auf dem Sortiermodul (3c) Erfassungsmittel (22) zum Erfassen eines Artikels (5), der auf die Palette kommt, vorhanden sind.

10. Vorrichtung nach Anspruch 7, 8 oder 9, **dadurch gekennzeichnet, dass** in Bezug auf die Längsrichtung der Palette (10) die erste Seitenkante mit einer Seitenstütze (15) versehen ist und die zweite Seitenkante offen ist und die erste Seitenkante mit einer Seitenstütze (15) niedriger als die offene zweite Seitenkante ist, wobei in diesem Fall sich die Palette (10) in einer geeignet schrägen Haltung bezüglich der Längsrichtung befindet und die auf der Palette (10) befindlichen Artikel (5) auf der Seitenstütze (15) aufliegen, der sich auf der ersten Seitenkante der Palette (10) befindet.

11. Vorrichtung nach irgendeinem der vorhergehenden Ansprüche 7-10, **dadurch gekennzeichnet, dass** das Kraftmittel (18) und das Drehmittel (11) elektrisch betriebene Spindelmotoren sind und der Sammelwagen (4) zumindest eine Stromquelle (13) umfasst, von der das Kraftmittel (18) und das Drehmittel (11) ihren Betriebsstrom erhalten.

12. Vorrichtung nach irgendeinem der vorhergehenden Ansprüche 7-11, **dadurch gekennzeichnet, dass** angepasst in Verbindung mit dem Sortiermodul (3c) eine Dockingstation (6) vorgesehen ist, an der ein Sammelwagen (4) angeordnet ist, um daran angeschlossen zu sein, und in der Dockingstation (6) ein Lademittel vorgesehen ist, das eingerichtet ist, um die Stromquelle (13) des Sammelwagens (4) zu laden, wenn der Sammelwagen (4) mit der Dockingstation (6) verbunden ist.

13. Vorrichtung nach irgendeinem der vorhergehenden Ansprüche 7-12, **dadurch gekennzeichnet, dass** sich auf dem Sammelwagen (4) eine Steuereinheit (14) befindet, die Mittel zum Steuern des Drehmittels (11) und des Kraftmittels (18) umfasst.

## Revendications

1. Procédé de manutention de livres et d'autres éléments de bibliothèque dans une bibliothèque ou un emplacement correspondant, dans lequel des livres et d'autres éléments de bibliothèque, c'est-à-dire des articles (5), sont triés au moyen d'un module de tri (3c) et chargés sur au moins un chariot de collecte (4), qui comprend au moins un cadre (7), des roues (8) et une palette (10) pourvue d'une butée arrière mobile (16), sur laquelle des articles de palette (5) sont chargés, laquelle palette (10) étant raccordée en charnière à proximité de sa première extrémité au cadre (7) du chariot de collecte (4) avec des charnières (12), et un moyen pour tourner (11) est agencé pour tourner la seconde extrémité de la palette (10) dans le plan vertical vers le haut et vers le bas autour des charnières (12), et, avant le début du tri, la seconde extrémité de la palette (10) du chariot de collecte (4) est abaissée à l'aide du moyen pour tourner (11) sur le chariot de collecte (4) autour des charnières (12) pour être sensiblement plus basse que la première extrémité de la palette (10), **caractérisé en ce que**, avant le début du chargement du chariot de collecte (4), la butée arrière (16) est déplacée à l'aide d'un moyen de puissance (18) appartenant au chariot de collecte (4) jusqu'à la hauteur de début du chargement, et, au fur et à mesure du chargement d'articles (5) sur la palette (10), la butée arrière (16) est déplacée à l'aide dudit moyen de puissance (18) vers la seconde extrémité plus basse de la palette (10), et, après le chargement de tous les articles destinés à être chargés sur le chariot (4), la butée arrière (16) est soulevée à l'aide du moyen de puissance (18) jusqu'à ce que le dernier article (5) chargé repose sur un support d'extrémité (17) à la première extrémité de la palette (10).

2. Procédé selon la revendication 1, **caractérisé en ce qu'**un article (5) arrivant sur la palette (10) est détecté à l'aide d'un moyen de détection (22), et, dans ce cas, la butée arrière (16) est abaissée jusqu'à ce que le moyen de détection (22) ne détecte plus l'article (5).

3. Procédé selon la revendication 1 ou 2, **caractérisé en ce que** le moyen de puissance (18) fonctionne avec un courant électrique et reçoit son courant de fonctionnement en provenance d'au moins une source d'alimentation électrique (13) appartenant au chariot de collecte (4), ladite source d'alimentation électrique étant chargée avec un moyen de charge appartenant à une station d'accueil (6) qui est raccordée à un module de tri (3c), lorsque le chariot de collecte (4) est raccordé à la station d'accueil (6) ou à un point de charge distinct.

4. Procédé selon la revendication 1, 2 ou 3, **caractérisé en ce que**, par rapport au sens longitudinal de la palette (10), ledit premier bord latéral de la palette (10) étant pourvu d'un support latéral (15), est maintenu plus bas que le second bord latéral ouvert de la palette (10), auquel cas la palette (10) est dans une attitude d'inclinaison appropriée par rapport au sens longitudinal et les articles (5) qui sont sur la palette (10) reposent sur le support latéral (15) qui se trouve sur le premier bord latéral de la palette (10).

5. Procédé selon l'une quelconque des revendications précédentes, **caractérisé en ce que** des articles (5) sont conduits depuis le module de tri (3c) sur le chariot de collecte (4) guidé par une rampe de guidage (19) pourvue de poils (20).

6. Procédé selon l'une quelconque des revendications précédentes, **caractérisé en ce que**, avant le début du déchargement des articles (5) de la palette (10), la palette (10) est tournée dans un plan sensiblement horizontal à l'aide du moyen pour tourner (11) sur le chariot de collecte (4).

7. Appareil de manutention de livres et d'autres éléments de bibliothèque dans une bibliothèque ou un emplacement correspondant, lequel appareil comprend au moins un module de tri (3c) et au moins un chariot de collecte (4) qui se compose d'au moins un cadre (7), des roues (8) et une palette (10) présentant une première extrémité avec un support d'extrémité (17) et une seconde extrémité, et laquelle palette (10) est pourvue d'une butée arrière mobile (16) supportant des éléments de bibliothèque, c'est-à-dire des articles (5), sur laquelle palette (10) des articles (5) sont agencés pour être chargés, et ledit chariot de collecte (4) comprenant un moyen pour tourner (11) qui est agencé pour tourner la seconde extrémité de la palette (10) dans le plan vertical vers le haut et vers le bas autour de charnières (12) à proximité de la première extrémité de la palette (10), **caractérisé en ce que** le chariot de collecte (4) comprend un moyen de puissance (18) qui est agencé pour déplacer la butée arrière (16) dans le sens longitudinal de la palette (10) vers la seconde extrémité de la palette (10) au cours du chargement d'articles (5) et vers la première extrémité de la palette (10) après le chargement des articles (5) pour amener le dernier article chargé (5) à reposer sur le support d'extrémité (17) à la première extrémité de la palette (10).

8. Appareil selon la revendication 7, **caractérisé en ce que** le moyen de puissance (18) est agencé pour déplacer automatiquement la butée arrière (16) vers le bas vers la seconde extrémité de la palette (10) lorsque des articles (5) sont chargés sur la palette (10).

9. Appareil selon la revendication 7 ou 8, **caractérisé en ce que**, pour déplacer la butée arrière (16), des moyens de détection (22), destinés à détecter un article (5) arrivant sur la palette, se trouvent sur le chariot de collecte (4) ou sur le module de tri (3c).

10. Appareil selon la revendication 7, 8 ou 9, **caractérisé en ce que**, par rapport au premier sens longitudinal de la palette (10), le premier bord latéral est pourvu d'un support latéral (15) et le second bord latéral est ouvert, et le premier bord latéral pourvu d'un support latéral (15) est plus bas que le second bord latéral ouvert, auquel cas la palette (10) est dans une attitude d'inclinaison appropriée par rapport au sens longitudinal et les articles (5) qui sont sur la palette (10) reposent sur le support latéral (15) qui se trouve sur le premier bord latéral de la palette (10).

11. Appareil selon l'une quelconque des revendications précédentes 7 à 10, **caractérisé en ce que** le moyen de puissance (18) et le moyen pour tourner (11) sont des moteurs d'axe à actionnement électrique et le chariot de collecte (4) comprend au moins une source d'alimentation (13) à partir de laquelle le moyen de puissance (18) et le moyen pour tourner (11) reçoivent leur courant de fonctionnement.

12. Appareil selon l'une quelconque des revendications précédentes 7 à 11, **caractérisé en ce que**, en raccordement avec le module de tri (3c), il se trouve une station d'accueil (6) à laquelle un chariot de collecte (4) est agencé pour être raccordé, et, dans la station d'accueil (6), il se trouve des moyens de charge, qui sont agencés pour charger la source d'alimentation électrique (13) du chariot de collecte (4) lorsque le chariot de collecte (4) est raccordé à la station d'accueil (6).

13. Appareil selon l'une quelconque des revendications précédentes 7 à 12, **caractérisé en ce que**, sur le chariot de collecte (4), il se trouve une unité de commande (14) qui comprend un moyen pour commander le moyen pour tourner (11) et le moyen de puissance (18).
